# EUROPEAN PATENT APPLICATION

(11) **EP 1 372 082 A1**
(43) Date of publication of application: **17.12.2003**
(21) Application number: 02703872.8
(22) Date of filing: 21.02.2002
(51) Int. Cl.: G06F 15/00

(54) **AUTHENTICATION SYSTEM AND AUTHENTICATION METHOD**

(30) Priority: 21.02.2001 JP 2001045111
(71) Applicant: TDK Corporation, Chuo-ku, Tokyo 103-8272 (JP)
(72) Inventor: GOSHIMA, Kenji, c/o TDK Corporation, Tokyo 103-8272 (JP); YAMAGUCHI, Naoya, c/o TDK Corporation, Tokyo 103-8272 (JP)
(74) Representative: HOFFMANN - EITLE
(86) International application number: JP0201532
(87) International publication number: WO02067133

(57) **Abstract**

An authentication method for a system comprising multiple intramural LANs connected with a central server comprises a step of issuing a school ID from a central server to an intramural server via the Internet, a step of informing a user via a client computer connected to the intramural server that the user is authorized to use a first application in the intramural server and a second application in the central server when a login request is received from the client computer, a step of transmitting the school ID from the intramural server to the central server when a request to use the second application is received from the client computer, and a step of permitting the client computer to use the second application when the school ID is received by the central server.

## Description

### BACKGROUND OF THE INVENTION

The invention relates to an authentication system and an authentication method, and particularly to an authentication system and an authentication method that reduce the load on the students who are the users, the load on the administrator of a central server who manages a user list, and the processing load on the central server.

### DESCRIPTION OF THE PRIOR ART

Recent advances in computer technology have led to the building of intramural LANs (Local Area Networks) at primary schools, junior high schools and so forth, and students often use these intramural LANs in their studies and for communication. In general, such an intramural LAN consists of a server managed by teachers, and a number of client computers connected to the server. Each student can use application programs by operating the individual client computers.

In addition to storing the application programs for use by the students, the server also stores at least one list containing the names and classes of the individual students and designating the kind of applications each student is authorized to use. Each student can use the authorized application(s) by correctly inputting his/her password when logging into the intramural LAN. Typical of these applications are a bulletin board application for posting coursework reports and a conference room application for communication.

The spread of the Internet in recent years has led to attempts to make it possible for students of different schools to exchange coursework reports and communicate with each other by, for example, connecting the intramural LANs installed at the schools in a certain district with a central server installed at one of the schools, an education center or the like via the Internet.

In this case, the central server stores the list containing the names, classes and schools of the individual students and designating the kind of applications each student is authorized to use, and also stores application programs for use by the students. Each student can use the bulletin board application, the conference room application and so forth by correctly imputing his/her password when logging into the central server. Therefore, when a certain student wants to present the results of his/her coursework to students in other schools, for example, the student not only must input his/her password correctly when logging into the intramural LAN but must also input the password correctly when logging into the central server. Only then can the student post the content of his/her coursework using the bulletin board application in the central server. The coursework report posted on the bulletin board by this method can be viewed through the intramural LAN of each school in the manner explained earlier.

In this system, however, the procedure for logging into the central server is complicated because the students (users) are required to go through two authentication procedures, i.e., the first authentication for logging into his/her school's intramural LAN and the second authentication for logging into the central server. The complexity of the procedure is a particular problem when the users are in a low age bracket like grade-schoolers.

Moreover, because the central server must store the name, school, class and the kind of authorized applications of every student, the load on the administrator is considerable. This is particularly true because a school, unlike most companies, has a frequent and continuous turnover of users (students). Collective management of student information for the respective schools in the central server is therefore quite burdensome.

Further, the data volume of the list that must be managed in the central server increases in proportion to the number of intramural LANs connected to the central server. The work of managing the authentication procedures in the central server therefore also increases as the number of connected intramural LANs increases.

In view of these circumstances, a need is felt for an authentication system for a system comprising multiple intramural LANs connected with a central server that reduces the load on the students who use the system, the load on the administrator of the central server who manages the list, and the processing load on the central server.

### SUMMARY OF THE INVENTION

In is therefore an object of the present invention is to provide an authentication system and an authentication method that reduce the load on the students who are the users, the load on the administrator of the central server who manages the list, and the processing load of the central server.

The above and other objects of the present invention can be accomplished by an authentication system comprising a central server and at least one LAN including a local server connected to the central server through the Internet and a client computer connected to the local sever, the local server permitting a user to log in when a user ID of the user and a correct password associated therewith are inputted using the client computer, and the central server permitting the user logged into the local server to log in when a connection request is received from the local server together with information at least enabling identification of the local server, without requesting a password of the user logged in the local server.

According to the present invention, when the local server sends a connection request to the central server together with information enabling identification of the local server, the central server permits login of the user already logged into the local server without requesting a password. The authentication procedure of the user is therefore simplified. Further, since there is no need for storing user information in the central server, the work of managing the users in the central server and the processing load on the central server are reduced.

In a preferred aspect of the present invention, the information enabling identification of the local server is a server ID issued by the central server.

In another preferred aspect of the present invention, the information enabling identification of the local server is an IP (Internet Protocol) address, a MAC (Medium Access Control) address or a Computer Name of the central server.

In a further preferred aspect of the present invention, the local server permits the user logged into the local server to use an application that can accumulate data, and the central server permits the user logged into the central server to use the same kind of an application.

In a further preferred aspect of the present invention, the local server has a list designating kinds of applications that each user is authorized to use, and the local server and the central server permit a logged-in user to use an application designated by the list.

In a further preferred aspect of the present invention, the LAN is an intramural LAN that is installed in a school.

The above and other objects of the present invention can be also accomplished by an authentication method comprising the steps of :
obtaining information enabling identification of a local server by a central server via the Internet;
informing a user via a client computer connected to the local server via a LAN that the user is authorized to use a first application in the local server and a second application in the central server when a user ID of the user and a correct password associated therewith are inputted using the client computer;
transmitting the information enabling identification of the local server from the local server to the central server when a request to use the second application is sent from the client computer; and
permitting the client computer to use the second application when the information enabling identification of the local server is received by the central server.

The above and other objects of the present invention can be also accomplished by an authentication method comprising the steps of :
issuing a first ID from a central server to a local server via the Internet;
informing a user via a client computer connected to the local server via a LAN that the user is authorized to use a first application in the local server and a second application in the central server when a second ID and a correct password associated therewith are inputted by using the client computer;
transmitting the first ID from the local server to the central server when a request to use the second application is sent from the client computer; and
permitting the client computer to use the second application when the first ID is received by the central server.

The above and other objects and features of the present invention will become apparent from the following description made with reference to the accompanying drawings.

### BRIEF DESCRIPTION OF THE DRAWINGS

Figure 1 is a schematic block diagram schematically illustrating an authentication system that is a preferred embodiment of the present invention.
Figure 2 is an example of a list stored in an intramural server 4.
Figure 3 is a flowchart showing the authentication procedure of an authentication system that is the preferred embodiment of the present invention.
Figure 4 is an example of a list stored in a central server 1.
Figure 5 is a schematic view showing an example of a screen that appears on the display of a client computer 5 when use of a bulletin board application is permitted.

### DESCRIPTION OF THE PREFERRED EMBODIMENT

Preferred embodiments of the present invention will now be explained with reference to the drawings.

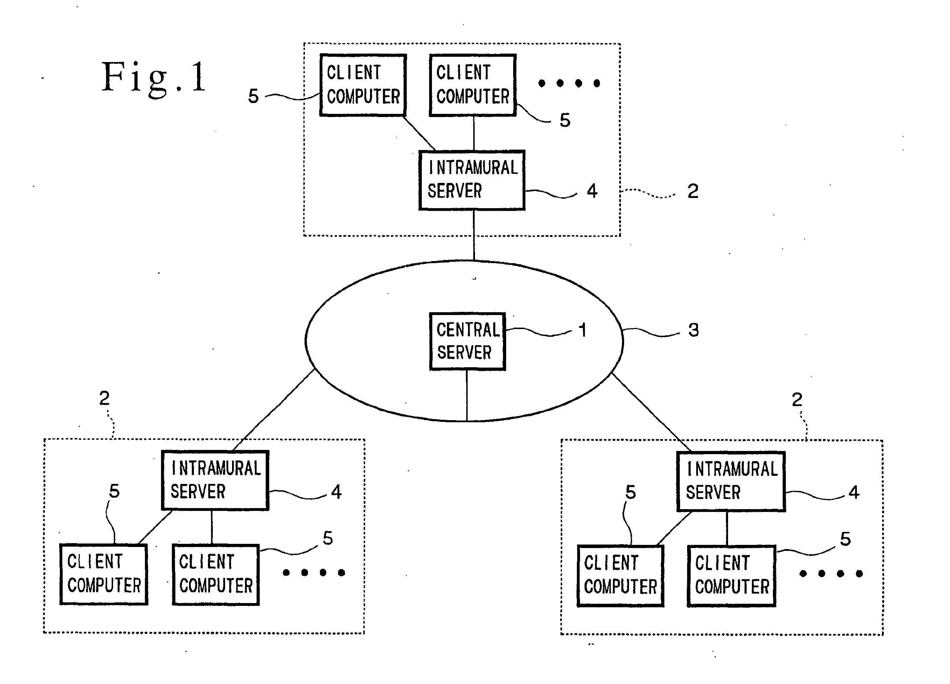

As shown in Figure 1, the authentication system of this embodiment comprises a central server 1, intramural LANs 2 and the Internet 3, which connects the central server 1 and the intramural LANs 2.

As explained further below, the central server 1 stores a bulletin board application program for presenting coursework, a conference room application for communication and so forth.

The intramural LANs 2 are LANs installed at primary schools, junior high schools or the like and an intramural server (local server) 4 which is managed by a teacher and a number of client computers 5 connected to the intramural server 4. Since the intramural LANs 2 are connected with the Internet 3 through the intramural server 4 as shown in Figure 1, the client computers 5 cannot connect to the Internet 3 without passing through the intramural server 4. The intramural server 4 not only stores applications for use by the students, such as the bulletin board application, the conference room application, a database and so forth, but also stores a list containing the name and class of each student and designating the kind of applications each student is authorized to use.

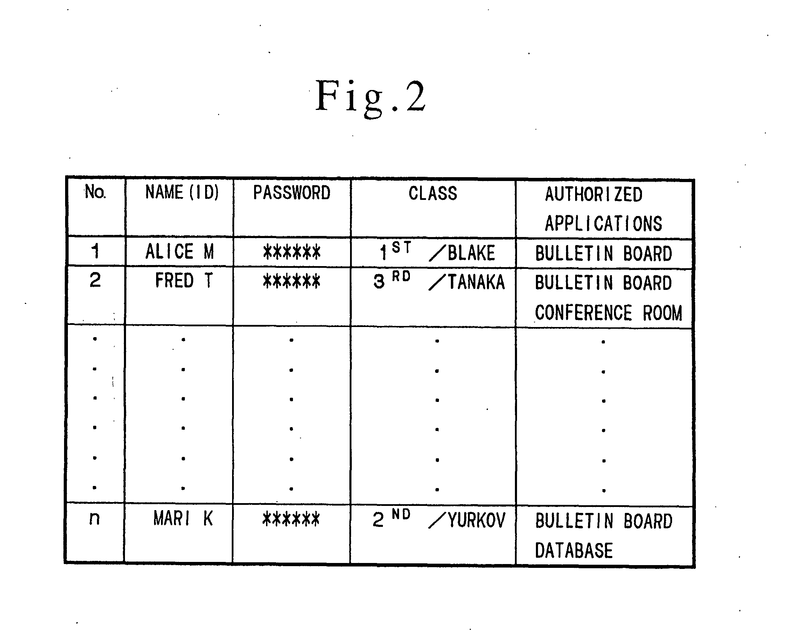

Figure 2 is an example of the list stored in the intramural server 4. At each school equipped with an intramural LAN 2, the administrator of the intramural server 4 prepares such a list and stores it in the intramural server 4.

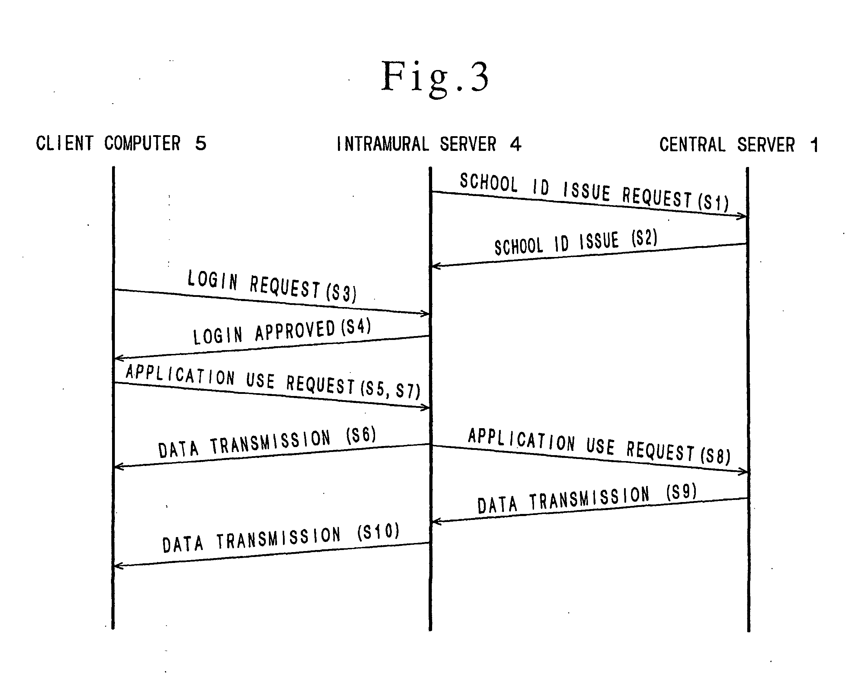

Next, the authentication method of the authentication system of this embodiment will be explained with the reference to the flowchart shown in Figure 3.

First, the intramural server 4 sends a request for issue of a school ID (server ID) to the central server 1 through the Internet 3 (Step S1). If the request is from a school to which a school ID should be issued, the central server 1 responds to the request by creating a proper school ID and transmitting it to the intramural server 4 through the Internet 3 (Step S2). At the same time, the school ID is stored in a memory (not shown) in association with the name of the school where the intramural server 4 is located. A "school to which a school ID should be issued" is, for example, a school in a certain district, and the administrator of the central server 1 decides the specific schools to which a school ID should be issued.

The submission of a request for issue of a school ID (Step S1) and the issuing of the school ID (Step S2) are carried out for each school where an intramural LAN 2 is installed, and a list defining the relationship between the school names and the school IDs is stored in the central server 1.

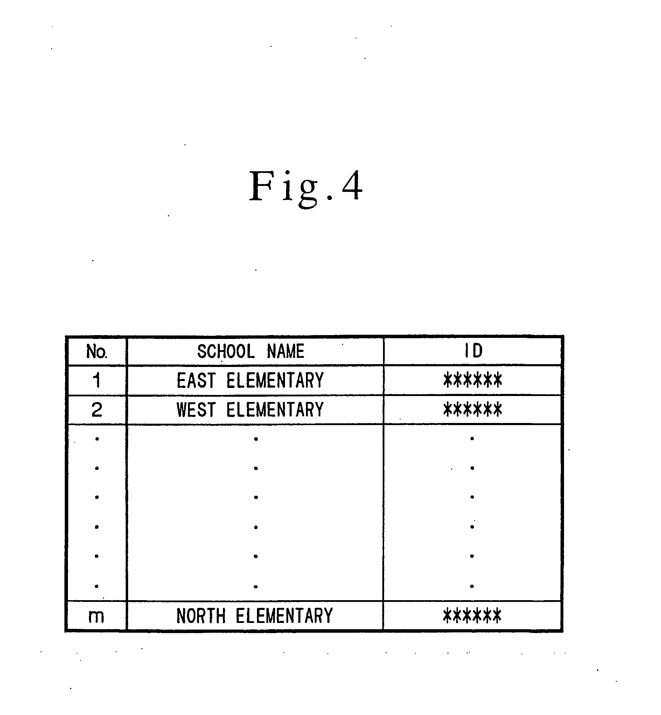

Figure 4 is an example of a list stored in the center server 1.

After the issue of the school ID, when a student of this school attempts to log into the intramural LAN 2 through the client computer 5 (Step S3), a login procedure is executed between the intramural server 4 and the client computer 5. First, when the student inputs his/her name (user ID) through the client computer 5, the client computer 5 requests the student's password. When the anticipated users are in low age brackets, it is preferable for input of the name to be accomplished by clicking an icon. For instance, a configuration can be adopted wherein icons indicating the classes of each grade are displayed on the initial screen, the student clicks the icon for his/her class to display a new screen showing icons indicating the names of the students in the class, and the student then clicks his/her icon to complete input of the name (user ID).

When a student (user) inputs a password, the client computer 5 transmits the inputted name (user ID) and the password to the intramural server 4. Upon receiving the name and password, the intramural server 4 judges whether the password is correct by referring to the list shown in Figure 2. In the case where the password is accepted, the intramural server 4 selects the application the student is authorized to use by referring to the list and permits use of the application by the client computer 5 (Step S4). On the contrary, when the password is not accepted, the intramural server 4 so informs the client computer 5 and the client computer 5 posts a message to this effect on the display.

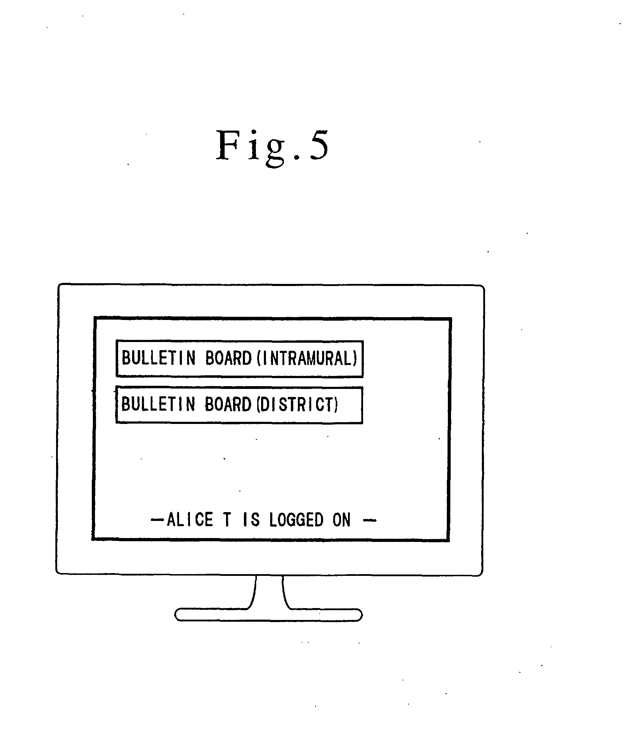

Figure 5 is a schematic view showing an example of a screen that appears on the display of the client computer 5.

As shown in Figure 5, when use of the bulletin board application is permitted, an icon for opening the intramural bulletin board application (shown in Figure 5 as "Bulletin board application (Intramural)") and an icon for the opening the common bulletin board application among multiple schools (shown in Figure 5 as "Bulletin board application (District)") appear on the display of the client computer 5.

When the student (user) responds by clicking the "Bulletin board application (Intramural)" icon for opening the intramural bulletin board application (Step S5), the client computer 5 requests the intramural server 4 to transmit the bulletin board data. In response to this request, the intramural server 4 transmits the bulletin board data stored in the intramural server 4 and enables data entry in the relevant bulletin board (Step S6). Consequently, the student (user) is able to use the authorized application (in this case, the intramural bulletin board application) in the closed network of the intramural LAN 2.

On the other hand, when the icon "Bulletin board application (District)" for opening the common bulletin board application among multiple schools is clicked (Step S7), the client computer 5 requests the intramural server 4 to transmit the bulletin board data, and based on this request, the intramural server 4 sends the central server 1 a request to use the common bulletin board application among multiple schools (Step S8). The school ID issued in Step S2, the name of the student (user ID), and the kind of authorized application (in this case, the bulletin board application) are transmitted to the central server 1 together with the request.

Upon receiving the request, the central server 1 confirms whether the school ID is one that has been issued. If it is confirmed to be an issued school ID, the central server 1 transmits the bulletin board data to the intramural server 4 (Step S9). Upon receiving the data from the central server 1, the intramural server 4 permits entry of data in the bulletin board and transmission of the bulletin board data to the client computer 5 (Step S10). Specifically, the bulletin board data of the central server 1 is shown on the display of the client computer 5, and when the data entered in the bulletin board from the client computer 5 is transmitted to the central server, the central server 1 displays the entered data and the name of the student (user ID) received on the bulletin board. Consequently, the student (user) is able to use the authorized application (in this case, the common bulletin board application among multiple schools) in the network centered on the central server 1.

According to the authentication system of this embodiment, when the student (user) is authorized to use a certain application in the intramural server 4 by logging into the intramural LAN 2, the use of the same kind of application in the central server 1 is permitted instantly. Therefore, the burden on the student using the system is reduced because the student can carry out the authentication procedure simply.

Furthermore, the central server 1 is required to store only the different applications and a simple list, like that shown in Figure 4, and is not required to store a huge list including the name, school and class of every student, and the kind of application each student is authorized to use. The burden of the administrator is therefore reduced substantially. Moreover, since the central server 1 can conduct an authentication merely by confirming the school ID using a simple list, like that shown in Figure 4, the processing load on the central server 1 during the authentication procedure is reduced substantially.

The present invention has thus been shown and described with reference to specific embodiments. However, it should be noted that the present invention is in no way limited to the details of the described arrangements but changes and modifications may be made without departing from the scope of the appended claims.

For example, the invention is not limited to interconnection between intramural LANs 2 and a central server 1 as explained with regard to the foregoing embodiment. Specifically, the LANs connected to the central server 1 are not limited to intramural LANs installed at primary schools and junior high schools, and any of various other types of LANs can be connected instead so as long as a basically closed network is maintained. However, the present invention is especially effective for use with a student bulletin board, conference room and other such applications that are low in confidentiality and do not require high security. Thus, the authentication system of the present invention is not suitable for application in, for example, a corporate system for sharing highly confidential industrial secrets.

Further, the above-described embodiment was explained with regard to use of a bulletin board application as the application for the student. however, the invention is not limited to this application, and any of various other applications can be used instead so as long as they can be used in common by plural users.

Moreover, in the above-described embodiment, the central server 1 issues only the school IDs. It can, however, be configured also to issue passwords, and to require both a school ID and a password when the intramural server 4 requests use of an application (Step S8). In this case, because the transmission of the school ID and password is carried under the control of the intramural server 4, the student (user) does not need to input either. Furthermore, a configuration that periodically updates the passwords can be adopted.

Further, in the above-described embodiment, the authentication between the central server 1 and the intramural server 4 is carried out using the school ID issued in advance. However, in the present invention, use of school IDs issued in advance is not essential, and the authentication between the central server 1 and the intramural server 4 can instead be carried out using any of various other types of information enabling identification of the individual, such as the IP address, MAC address (physical address), or Computer Name of the intramural server 4. In this case, the step in which the intramural server 4 requests the central server 1 to issue the school ID (Step S1) and the step in which the central server 1 issues the school ID to the intramural server 4 (Step S2) can be replaced by a step in which the central server 1 acquires information enabling identification of the individual, such as the IP address, MAC address, or Computer Name, of the intramural server 4.

Moreover, in the above-described embodiment, the schools to which school IDs should be issued are schools in a certain district. However, the present invention it is not limited to this arrangement and the schools to which IDs should be issued can instead be, for instance, schools of a certain type (e.g. private schools) or schools having a certain relationship with each other (e.g. sister schools).

Furthermore, a modified embodiment of the present invention is possible wherein when a client computer 5 logs into an intramural server 4 that has been issued a school ID issued (Step S4), the school ID is transmitted from the intramural server 4 to the client computer 5, and, consequently, the client computer 5 itself acquires the school ID. If the client computer 5 itself acquires the school ID, the client computer 5 can log into the central server 1 directly by using the school ID, making it possible for the client computer 5 to connect to the central server 1 without passing through the intramural server 4. When such direct login is made possible, however, information on each user (student name, and type of application(s)) needs to be stored and managed in the central server 1.

As explained above, the present invention simplifies user authentication procedure and reduces the user management load of the central server, and also provides an authentication system and authentication method that reduce the processing load of the central server. Therefore, the present invention is particularly effective in cases where closed intramural LANs have been installed at individual schools independently of the Internet, and it is desired to enable groupware already installed on these closed intramural LANs to be interconnected.

## Claims

1. An authentication system comprising a central server and at least one LAN including a local server connected to the central server through the Internet and a client computer connected to the local sever, the local server permitting a user to log in when a user ID of the user and a correct password associated therewith are inputted using the client computer, and the central server permitting the user logged into the local server to log in when a connection request is received from the local server together with information at least enabling identification of the local server, without requesting a password of the user logged in the local server.

2. The authentication system as claimed in claim 1, wherein the information enabling identification of the local server is a server ID issued by the central server.

3. The authentication system as claimed in claim 1, wherein the information enabling identification of the local server is an IP address, a MAC address or a Computer Name of the central server.

4. The authentication system as claimed in any one of claims 1 to 3, wherein the local server permits the user logged into the local server to use an application that can accumulate data, and the central server permits the user logged into the central server to use the same kind of an application.

5. The authentication system as claimed in claim 4, wherein the local server has a list designating kinds of applications that each user is authorized to use, and the local server and the central server permit a logged-in user to use an application designated by the list.

6. The authentication system as claimed in any one of claims 1 to 5, wherein the LAN is an intramural LAN that is installed in a school.

7. An authentication method comprising the steps of
obtaining information enabling identification of a local server by a central server via the Internet;
informing a user via a client computer connected to the local server via a LAN that the user is authorized to use a first application in the local server and a second application in the central server when a user ID of the user and a correct password associated therewith are inputted using the client computer;
transmitting the information enabling identification of the local server from the local server to the central server when a request to use the second application is sent from the client computer; and
permitting the client computer to use the second application when the information enabling identification of the local server is received by the central server.

8. An authentication method comprising the steps of
issuing a first ID from a central server to a local server via the Internet;
informing a user via a client computer connected to the local server via a LAN that the user is authorized to use a first application in the local server and a second application in the central server when a second ID and a correct password associated therewith are inputted by using the client computer;
transmitting the first ID from the local server to the central server when a request to use the second application is sent from the client computer; and
permitting the client computer to use the second application when the first ID is received by the central server.
